# EUROPÄISCHE PATENTSCHRIFT

(11) **EP 3 682 146 B1**
(45) Veröffentlichungstag und Bekanntmachung des Hinweises auf die Patenterteilung: **04.08.2021**
(21) Anmeldenummer: 18762777.3
(22) Anmeldetag: 16.08.2018
(51) Int. Cl.: F16H 61/32, F16H 61/686, F16H 63/30, F16D 27/115

(54) **KRAFTFAHRZEUGGETRIEBE MIT ELEKTROMOTORISCH BETÄTIGTER SCHALTEINHEIT**
MOTOR VEHICLE GEARBOX WITH SWITCHING UNIT ACTIVATED BY ELECTRIC MOTOR
BOÎTE DE VITESSES DE VÉHICULE À MOTEUR À UNITÉ DE CHANGEMENT DE VITESSE ACTIONNÉE PAR MOTEUR ÉLECTRIQUE

(30) Priorität: 07.09.2017 DE 102017008412
(43) Veröffentlichungstag der Anmeldung: 22.07.2020
(73) Patentinhaber: Daimler AG, 70372 Stuttgart (DE)
(72) Erfinder: SPERRFECHTER, Stefan, 73072 Donzdorf (DE); APPELTAUER, Peter, 70736 Fellbach (DE)
(74) Vertreter: JENSEN & SON
(86) Internationale Anmeldenummer: PCT/EP2018/072218
(87) Internationale Veröffentlichungsnummer: WO 2019/048208

(56) Entgegenhaltungen:
- DE-A1-102015 008 830
- JP-A- 2004 316 893
- US-A1- 2004 116 230

## Beschreibung

Die Erfindung betrifft ein Kraftfahrzeuggetriebe mit zumindest einer Schalteinheit.

Aus dem Stand der Technik bekannte Elektromotoren mit einem hohen Drehmoment und einer geringen Drehzahl weisen bei einer gleichen Leistung höhere Abmessungen, ein höheres Gewicht und einen höheren Preis auf, als Elektromotoren mit einem geringen Drehmoment und einer hohen Drehzahl. Daher werden elektrische Winkel-Aktuatoren häufig aus einem kleinen und schnelldrehenden Elektromotor und einem Getriebe mit einem hohen Übersetzungsverhältnis zusammengesetzt. Das Getriebe reduziert dabei erheblich eine Drehzahl des Elektromotors und erhöht ein Drehmoment des Elektromotors entsprechend.

Derartige Aktuatoren werden als Baukastensystem angeboten. Dadurch ergibt sich eine hohe Anzahl an Kombinationsmöglichkeiten unterschiedlicher Elektromotoren mit unterschiedlichen Getrieben. Auch bei einer gemeinsamen Verbauung in ein Gehäuse sind dabei Elektromotor und Getriebe voneinander getrennte Einheiten, welche aneinandergereiht angeordnet sind. Dadurch weisen diese Aktuatoren hohe Abmessungen, ein hohes Gewicht und als Add-on-Geräte eine geringe Flexibilität bei einer Anwendung und insbesondere bei einem Einbau in sonstige Aggregate auf.

Kraftfahrzeuggetriebe mit Schalteinheiten, die mittels eines Elektromotors betätigt werden, sind beispielsweise aus der US 2004/116230 A1 und der JP 2004 316893 A bekannt.

Um eine bessere Systemintegration in sonstige Aggregate zu verbessern, sind beispielsweise aus den Druckschriften DE 10 2009 053 727 A1 und DE 196 18 428 A1 integrative Lösungen bekannt. Aus der DE 10 2009 053 727 A1 ist bereits eine integrierte Einheit aus einem zykloiden Exzentergetriebe und einem elektromagnetischen Antrieb des Exzentergetriebes bekannt. Der Antrieb weist einen Rotor und einen Stator mit ringförmig umlaufend angeordneten Spulen auf, welche dazu vorgesehen sind, bei einer geeigneten Bestromung ein steuerbar veränderliches Magnetfeld zu erzeugen. Ferner weist das Exzentergetriebe eine exzentrische Kurvenscheibe auf, welche um den Stator angeordnet ist und den Rotor ausbildet. Durch die erforderliche Exzentrizität der Kurvenscheibe ist ein Ringspalt zwischen dem Stator und der Kurvenscheibe in Umfangsrichtung variabel breit. Elektromagnetische Kräfte zwischen dem veränderlichen Magnetfeld der Spulen des Stators und der Kurvenscheibe sollen die Kurvenscheibe in Bewegung setzen und somit einen Aktuator betätigen. Durch den exzentrischen Umlauf der Kurvenscheibe ist dabei ein Luftspalt zwischen dem Stator und der Kurvenscheibe an einer breitesten Stelle mindestens geringfügig größer als die Exzentrizität. Eine elektromagnetische Koppelung zwischen dem Stator und der Kurvenscheibe verringert sich mit zunehmendem Abstand zwischen dem Stator und der Kurvenscheibe und somit verringert sich auch eine Effizienz und eine Leistung des elektromagnetischen Antriebes.

Um eine Unwucht einer einzelnen Kurvenscheibe aufzuheben, wäre grundsätzlich eine Anordnung zweier, diametral entgegengesetzt versetzter Kurvenscheiben möglich. Bei hoch dynamisch bewegten Anwendungen, bei denen eine durch eine Exzentrizität verursachte Unwucht unzulässig ist, ist eine derartige Anordnung jedoch nicht möglich, weil dabei ein Antriebsmoment durch ein veränderliches Magnetfeld von Spulen eines Stators ebenso zu Null reduziert werden würde wie die Unwucht.

Ferner ist aus der Druckschrift DE 10 2015 008 790 A1 bereits ein Kraftfahrzeuggetriebe bekannt, welches eine Schalteinheit mit zwei miteinander drehfest verbindbaren Kopplungselementen und einen elektromechanischen Betätigungsaktuator aufweist, welcher als Schrittmotor ausgebildet ist.

Zudem ist aus der gattungsgemäßen Druckschrift DE 10 2015 008 830 A1 bereits ein Kraftfahrzeuggetriebe bekannt, welches eine Schalteinheit mit zwei miteinander drehfest verbindbaren Kopplungselementen, einen Betätigungsaktuator und eine induktive Verbindungseinheit aufweist, welche den Betätigungsaktuator mit einer Steuer- und/oder Regeleinheit verbindet.

Der Erfindung liegt insbesondere die Aufgabe zugrunde, ein Kraftfahrzeuggetriebe mit einer hohen Effizienz bereitzustellen. Sie wird durch eine erfindungsgemäße Ausgestaltung entsprechend dem Anspruch 1 gelöst. Weiterbildungen der Erfindung ergeben sich aus den abhängigen Ansprüchen.

Die Erfindung geht aus von einem Kraftfahrzeuggetriebe mit zumindest einem Gehäuse, mit zumindest einer Schalteinheit, welche ein erstes Kopplungselement und ein mit dem ersten Kopplungselement drehfest verbindbares zweites Kopplungselement aufweist, mit zumindest einem als ein Außenläufermotor ausgebildeten Betätigungsmotor, welcher zu einer Betätigung der Schalteinheit vorgesehen ist und welcher einen Rotor und einen Stator aufweist, mit zumindest einer Induktionseinheit, welche zu einer Energieversorgung des Betätigungsmotors vorgesehen ist und welche zumindest eine Primärspule und zumindest eine Sekundärspule aufweist, mit zumindest einer Getriebevorrichtung, welche zu einer Umwandlung eines in einer Umfangsrichtung wirkenden Drehmoments des Betätigungsmotors in eine axial wirkende Betätigungskraft vorgesehen ist und welche eine Getriebeeinheit mit einem ersten Hohlrad aufweist, wobei das erste Kopplungselement und der Stator mittels einer ersten Tellereinheit permanent drehfest verbunden sind.

Es wird vorgeschlagen, dass der Stator mittels einer zweiten Tellereinheit permanent drehfest mit zumindest einem Getriebeelement, insbesondere dem ersten Hohlrad, der Getriebeeinheit verbunden ist und der Stator axial zwischen der ersten Tellereinheit und der zweiten Tellereinheit angeordnet ist. Insbesondere weist das Kraftfahrzeuggetriebe die erste Tellereinheit und/oder die zweite Tellereinheit auf. Vorteilhaft bilden die erste Tellereinheit, der Stator und die zweite Tellereinheit, insbesondere zusammen, in zumindest einer Schnittebene eine zumindest im Wesentlichen U-förmige Schnittfläche. Durch diese Ausgestaltung eines Kraftfahrzeuggetriebes kann insbesondere eine hohe Effizienz, vorteilhaft Energieeffizienz, Bauteileeffizienz und/oder Bauraumeffizienz, ermöglicht werden. Vorteilhaft kann ein hoher Integrationsgrad, insbesondere einer Getriebevorrichtung und eines Betätigungsmotors, erreicht werden. Besonders vorteilhaft kann eine einfache Lagerung einer Getriebeeinheit realisiert werden, insbesondere da eine axiale Positionierung eines Planetenradträgers ohne Lagerbauteile möglich ist.

Mit dem Begriff der drehfesten Kopplung oder der drehfesten Verbindung zweier Elemente ist gemeint, dass die beiden Elemente koaxial angeordnet und derart miteinander verbunden sind, dass sie mit der gleichen Winkelgeschwindigkeit drehen.

Insbesondere ist das Kraftfahrzeuggetriebe als ein Mehrstufenkraftfahrzeuggetriebe ausgebildet. Vorteilhaft weist das Kraftfahrzeuggetriebe zumindest zwei, besonders vorteilhaft zumindest drei und besonders bevorzugt zumindest vier Zahnradstufen, insbesondere Planetenradstufen, auf. Ferner umfasst das Kraftfahrzeuggetriebe vorteilhaft weitere Schalteinheiten mit weiteren Kopplungselementen, welche besonders vorteilhaft als Kupplungen oder Bremsen ausgebildet sein können und welche vorzugsweise innerhalb des Gehäuses angeordnet sind. Des Weiteren weist das Kraftfahrzeuggetriebe vorteilhaft eine Mehrzahl an Getriebewellen auf, welche besonders vorteilhaft Kopplungselemente, Zahnräder, vorzugsweise Sonnenräder und/oder Hohlräder, und/oder Zahnradträger, vorzugsweise Planetenradträger, miteinander verbinden, wenn diese beabstandet zueinander angeordnet sind. Vorzugsweise umfasst das Kraftfahrzeuggetriebe einen Betätigungsaktuator der Schalteinheit. Bevorzugt weist der Betätigungsaktuator den Betätigungsmotor, die Getriebeeinheit und eine Spreizeinheit auf. Unter einer "Tellereinheit" soll insbesondere eine Einheit verstanden werden, welche eine senkrecht zu einer Hauptrotationsachse angeordnete Haupterstreckungsebene aufweist und welche vorteilhaft rotationssymmetrisch ausgebildet ist. Besonders vorteilhaft beträgt eine maximale Erstreckung der Tellereinheit parallel zu ihrer Rotationsachse höchstens 30 %, insbesondere höchstens 20 % und bevorzugt höchstens 15 %, einer maximalen Erstreckung der Tellereinheit in der Haupterstreckungsebene. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft. Vorteilhaft ist das zumindest eine Getriebeelement als ein Zahnrad, besonders vorteilhaft als ein Sonnenrad oder als ein Hohlrad, oder als ein Zahnradträger, besonders vorteilhaft ein Planetenradträger, ausgebildet.

Ferner wird vorgeschlagen, dass das Kraftfahrzeuggetriebe zumindest eine Elektronikeinheit aufweist, die an der zweiten Tellereinheit angeordnet ist und die mit der zweiten Tellereinheit permanent drehfest gekoppelt ist. Insbesondere ist die Elektronikeinheit mit der zweiten Tellereinheit unmittelbar permanent drehfest gekoppelt. Vorteilhaft ist die Elektronikeinheit dazu vorgesehen, eine von dem Betätigungsmotor aufgenommene Leistung einzustellen. Insbesondere weist das Kraftfahrzeuggetriebe eine Steuer- und Regeleinheit auf, welche vorteilhaft zu einer Ansteuerung des Betätigungsaktuators vorgesehen ist und welche besonders vorteilhaft mittels der Induktionseinheit mit der Elektronikeinheit verbunden ist. Dadurch kann ein vorteilhaft hoher Integrationsgrad, insbesondere einer Getriebevorrichtung und einer Elektronikeinheit, erreicht werden. Ferner können besonders vorteilhaft Übertragungsverluste einer Induktionseinheit bei einer Ansteuerung eines Betätigungsaktuators durch eine Elektronikeinheit unberücksichtigt bleiben.

Zudem wird vorgeschlagen, dass die Elektronikeinheit, insbesondere in einer Hauptrotationsachse des Kraftfahrzeuggetriebes betrachtet, ringförmig ausgebildet ist. Insbesondere ist die Elektronikeinheit gegenüber dem Gehäuse drehbar angeordnet. Dadurch kann vorteilhaft ein unwuchtfreier Lauf ermöglicht werden.

Darüber hinaus wird vorgeschlagen, dass das Kraftfahrzeuggetriebe zumindest ein erstes Radiallager aufweist, welches axial zwischen der ersten Tellereinheit und dem Stator angeordnet ist und welches zu einer Lagerung des Rotors gegenüber dem Stator vorgesehen ist. Insbesondere ist das erste Radiallager als ein Wälzlager, vorteilhaft als ein Kugellager und besonders vorteilhaft als ein Rillenkugellager, ausgebildet. Vorteilhaft ist das erste Radiallager senkrecht zu der Hauptrotationsachse betrachtet zwischen der ersten Tellereinheit und dem Stator angeordnet. Des Weiteren wird vorgeschlagen, dass das Kraftfahrzeuggetriebe zumindest ein zweites Radiallager aufweist, welches axial zwischen der zweiten Tellereinheit und dem Stator angeordnet ist und welches zu einer Lagerung des Rotors gegenüber dem Stator vorgesehen ist. Insbesondere ist das zweite Radiallager als ein Wälzlager, vorteilhaft als ein Kugellager und besonders vorteilhaft als ein Rillenkugellager, ausgebildet. Vorteilhaft ist das zweite Radiallager senkrecht zu der Hauptrotationsachse betrachtet zwischen der zweiten Tellereinheit und dem Stator angeordnet. Ferner wird vorgeschlagen, dass das erste Radiallager radial innerhalb des zweiten Radiallagers angeordnet ist. Insbesondere weist das erste Radiallager in der Hauptrotationsachse betrachtet einen geringeren Radius auf als das zweite Radiallager. Hierdurch kann vorteilhaft eine hohe Effizienz, insbesondere Bauraumeffizienz, erreicht werden. Ferner kann eine vorteilhafte Lagerung bereitgestellt werden. Vorzugsweise kann eine einfache Herstellung, Montage und/oder Kabelführung ermöglicht werden.

Zudem wird vorgeschlagen, dass zumindest ein Teil der Getriebevorrichtung axial, insbesondere senkrecht zu der Hauptrotationsachse betrachtet, zwischen der ersten Tellereinheit und der zweiten Tellereinheit angeordnet ist. Insbesondere ist die Getriebeeinheit axial, vorteilhaft senkrecht zu der Hauptrotationsachse betrachtet, zwischen der ersten Tellereinheit und der zweiten Tellereinheit angeordnet. Des Weiteren wird vorgeschlagen, dass zumindest ein Teil der Getriebevorrichtung, insbesondere in der Hauptrotationsachse betrachtet, radial zwischen dem Rotor und der Schalteinheit angeordnet ist. Insbesondere ist die Getriebeeinheit, vorteilhaft in der Hauptrotationsachse betrachtet, radial zwischen dem Rotor und der Schalteinheit angeordnet. Dadurch kann vorteilhaft eine hohe Effizienz, insbesondere eine Bauraumeffizienz und/oder ein hoher Integrationsgrad erreicht werden.

Die Getriebeeinheit könnte insbesondere zumindest ein Exzentergetriebe, vorteilhaft mit zykloiden und/oder evolventischen Verzahnungen, aufweisen. Um eine Unwucht zu vermeiden, könnte dabei vorteilhaft ein weiteres Exzentergetriebe um 180° versetzt angewendet werden. Ferner könnte dabei eine umfangsseitig punktuelle Last des Exzentergetriebes vorteilhaft durch eine massive Bauweise ausgeglichen sein. Die Getriebeeinheit könnte insbesondere auch zumindest ein Harmonic-Drive-Getriebe umfassen. Es wird jedoch ferner vorgeschlagen, dass die Getriebeeinheit zumindest ein Planetengetriebe aufweist. Insbesondere weist die Getriebeeinheit zumindest ein reduziertes Planetengetriebe, beispielsweise ein Acbar-Getriebe und/oder vorteilhaft ein Wolfromgetriebe auf. Vorteilhaft bildet die Getriebeeinheit das Planetengetriebe aus. Grundsätzlich könnte die Getriebeeinheit insbesondere auch weitere, vorteilhaft mehrstufig zusammengesetzte, Planetengetriebe aufweisen. Hierdurch kann vorteilhaft eine hohe Effizienz, insbesondere Energieeffizienz, erreicht werden. Ferner kann vorteilhaft eine Verlustleistung eines Betätigungsmotors gering gehalten werden. Besonders vorteilhaft kann eine gute Kopplung zwischen einem Stator eines Betätigungsmotors und einem in eine Getriebeeinheit integrierten Rotor, insbesondere durch einen konstanten und geringen Luftspalt, realisiert werden. Besonders bevorzugt kann ein unwuchtfreier Lauf ermöglicht werden. Zudem kann eine Selbsthemmung realisiert werden.

Zudem wird vorgeschlagen, dass die Getriebeeinheit zumindest ein Hohlrad, insbesondere ein zweites Hohlrad, aufweist, welches permanent drehfest mit einem ersten Spreizelement einer Spreizeinheit, insbesondere der zuvor genannten Spreizeinheit, verbunden ist. Insbesondere ist das Hohlrad unmittelbar permanent drehfest mit dem ersten Spreizelement der Spreizeinheit verbunden. Vorteilhaft weist die Getriebevorrichtung die Spreizeinheit auf. Ferner weist vorteilhaft der Betätigungsaktuator die Spreizeinheit auf. Besonders vorteilhaft umfasst die Spreizeinheit ein zweites Spreizelement. Vorzugsweise ist die Spreizeinheit zu einer Spreizung des ersten Spreizelements und des zweiten Spreizelements relativ zueinander vorgesehen. Dadurch kann eine vorteilhafte Betätigung einer Spreizeinheit erreicht werden. Ferner kann besonders vorteilhaft ein hoher Integrationsgrad, insbesondere einer Getriebeeinheit und einer Spreizeinheit, erreicht werden.

Darüber hinaus wird vorgeschlagen, dass die Spreizeinheit radial außerhalb der Getriebeeinheit angeordnet ist. Insbesondere ist ein Teil des ersten Spreizelements radial innerhalb des zweiten Spreizelements angeordnet. Ferner ist insbesondere ein Teil des zweiten Spreizelements radial außerhalb des ersten Spreizelements angeordnet.

Ferner wird vorgeschlagen, dass das Kraftfahrzeuggetriebe zumindest ein Schrägkugellager aufweist, welches zu einer Abstützung der Spreizeinheit gegen die erste Tellereinheit vorgesehen ist. Insbesondere ist das Schrägkugellager zu einer Abstützung des ersten Spreizelements gegen die erste Tellereinheit vorgesehen. Vorteilhaft ist das Schrägkugellager axial zwischen der ersten Tellereinheit und der Schalteinheit angeordnet. Dadurch kann vorteilhaft eine hohe Effizienz, insbesondere Energieeffizienz, erreicht werden. Besonders vorteilhaft können Reibungsverluste gering gehalten werden, insbesondere da in einem eingelegten Gang eine erste Tellereinheit und eine Spreizeinheit mitlaufend ausgebildet werden können. Ferner kann besonders vorteilhaft eine Verdrehung eines Schrägkugellagers lediglich während einer Betätigung einer Schalteinheit und lediglich um einen geringen Winkelbetrag erreicht werden. Vorzugsweise kann eine hohe Stabilität, insbesondere durch eine Abstützung auf einem kürzesten Weg, realisiert werden.

Zudem wird vorgeschlagen, dass die Schalteinheit als eine Lamellenkupplung ausgebildet ist. Darüber hinaus wird vorgeschlagen, dass das erste Kopplungselement einen Außenlamellenträger und eine Mehrzahl an, insbesondere axial verschiebbar angeordneten, Außenlamellen ausbildet. Insbesondere bildet das zweite Kopplungselement einen Innenlamellenträger und eine Mehrzahl an, vorteilhaft zwischen die Außenlamellen des ersten Kopplungselements greifenden und/oder axial verschiebbar angeordneten, Innenlamellen aus. Vorteilhaft ist die Spreizeinheit dazu vorgesehen, die Außenlamellen des ersten Kopplungselements gegen die Innenlamellen des Innenlamellenträgers zu drücken. Hierdurch kann vorteilhaft eine hohe Effizienz, insbesondere Bauraumeffizienz und/oder Kosteneffizienz, realisiert werden. Ferner kann besonders vorteilhaft eine Lastschaltbarkeit erreicht werden.

Des Weiteren wird vorgeschlagen, dass die Sekundärspule permanent drehfest mit dem ersten Kopplungselement, insbesondere mit dem Außenlamellenträger des ersten Kopplungselements, gekoppelt ist. Insbesondere ist die Sekundärspule unmittelbar permanent drehfest mit dem ersten Kopplungselement, insbesondere mit dem Außenlamellenträger des ersten Kopplungselements, gekoppelt. Vorteilhaft ist die Primärspule permanent drehfest, besonders vorteilhaft unmittelbar permanent drehfest, mit dem Gehäuse gekoppelt. Vorzugsweise sind die Primärspule und die Sekundärspule durch eine Getriebewelle räumlich voneinander getrennt. Dadurch kann vorteilhaft eine Bauteileeffizienz und/oder eine einfache Bauweise ermöglicht werden.

Weitere Vorteile ergeben sich aus der folgenden Figurenbeschreibung. In den Figuren ist ein Ausführungsbeispiel der Erfindung dargestellt.

Dabei zeigen:
- Fig. 1: einen Ausschnitt aus einem Kraftfahrzeuggetriebe in einer schematisierten Darstellung mit einer Schalteinheit,
- Fig. 2: einen Ausschnitt aus dem Kraftfahrzeuggetriebe in einer schematisierten Darstellung mit der Schalteinheit, mit einer Getriebevorrichtung und mit einem Betätigungsmotor.

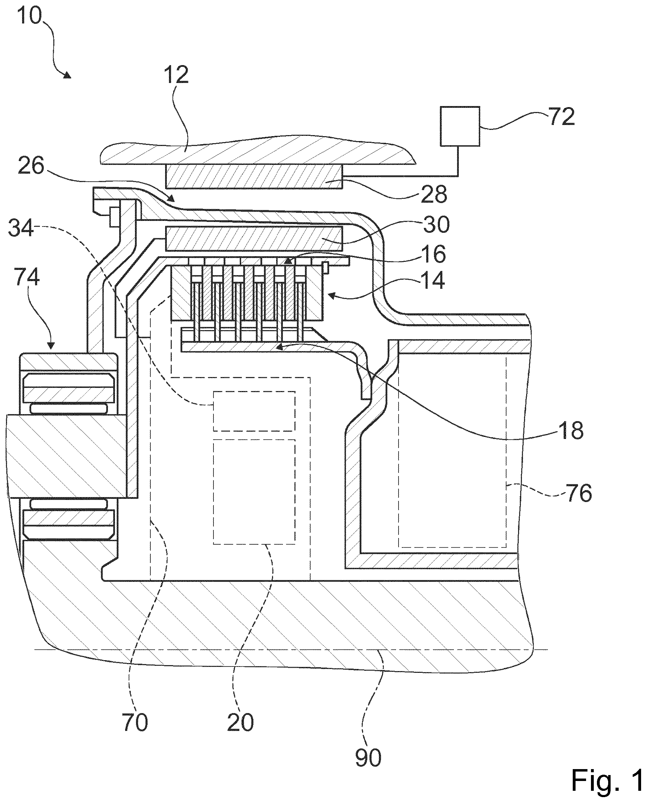

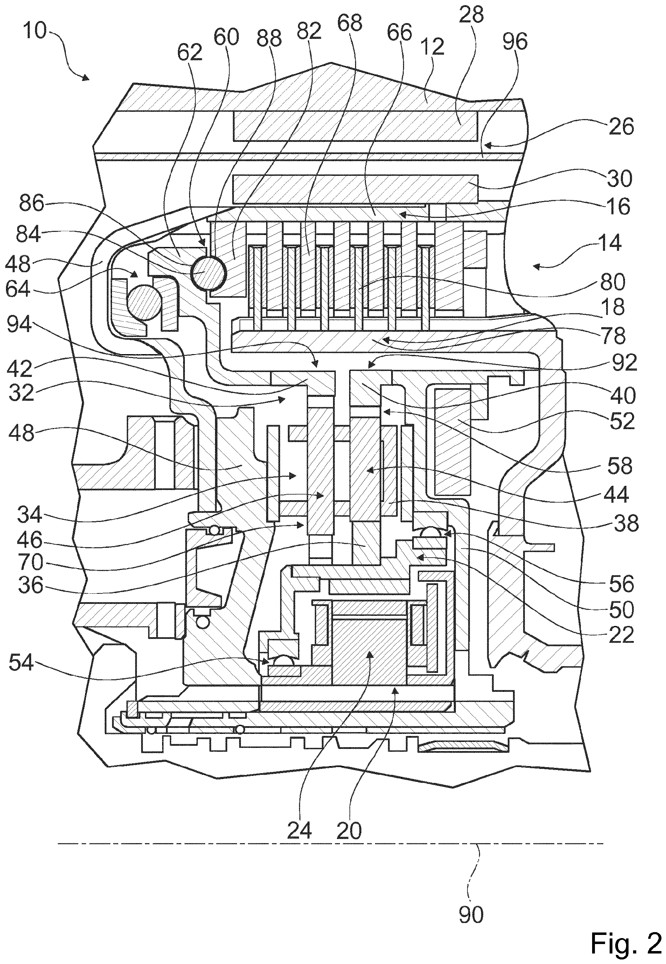

Figur 1 und Figur 2 zeigen einen Ausschnitt aus einem Kraftfahrzeuggetriebe 10. Das Kraftfahrzeuggetriebe 10 ist als ein Mehrstufengetriebe ausgebildet. Das Kraftfahrzeuggetriebe 10 ist als ein Automatikgetriebe ausgebildet. Das Kraftfahrzeuggetriebe 10 weist mehrere Planetenradstufen 74, 76 auf. Die Planetenradstufen 74, 76 sind entlang einer Hauptrotationsachse 90 angeordnet. Das Kraftfahrzeuggetriebe 10 weist eine erste Planetenradstufe 74 auf. Das Kraftfahrzeuggetriebe 10 weist ferner eine zweite Planetenradstufe 76 auf. Die erste Planetenradstufe 74 ist um die Hauptrotationsachse 90 angeordnet. Die zweite Planetenradstufe 76 ist um die Hauptrotationsachse 90 angeordnet. Das Kraftfahrzeuggetriebe 10 kann mit einem Verbrennungsmotor, mit einem Elektroantrieb und/oder mit einem Hybridantrieb verbaut sein. Alternativ könnte ein Kraftfahrzeuggetriebe auch als ein Doppelkupplungsgetriebe ausgebildet sein. Ferner könnte ein Kraftfahrzeuggetriebe mehr als zwei Planetenradstufen aufweisen.

Das Kraftfahrzeuggetriebe 10 umfasst ein Gehäuse 12. Das Gehäuse 12 ist als ein Getriebegehäuse ausgebildet. Das Gehäuse 12 umschließt die Planetenradstufen 74, 76.

Ferner umfasst das Kraftfahrzeuggetriebe 10 eine erste Tellereinheit 48. Die erste Tellereinheit 48 ist axial zwischen der ersten Planetenradstufe 74 und der zweiten Planetenradstufe 76 angeordnet. Das Kraftfahrzeuggetriebe 10 umfasst eine zweite Tellereinheit 50. Die zweite Tellereinheit 50 ist axial zwischen der ersten Planetenradstufe 74 und der zweiten Planetenradstufe 76 angeordnet. Die erste Tellereinheit 48 ist axial zwischen der ersten Planetenradstufe 74 und der zweiten Tellereinheit 50 angeordnet. Die zweite Tellereinheit 50 ist zwischen der ersten Tellereinheit 48 und der zweiten Planetenradstufe 76 angeordnet. Die erste Tellereinheit 48 und die zweite Tellereinheit 50 sind permanent drehfest miteinander gekoppelt.

Das Kraftfahrzeuggetriebe 10 umfasst eine Schalteinheit 14. Die Schalteinheit 14 ist als eine Lamellenkupplung ausgebildet.

Die Schalteinheit 14 weist ein erstes Kopplungselement 16 auf. Das erste Kopplungselement 16 weist einen Außenlamellenträger 66 auf. Das erste Kopplungselement 16 weist eine Mehrzahl an Außenlamellen auf, wovon beispielhaft eine Außenlamelle 68 mit einem Bezugszeichen versehen ist. Das erste Kopplungselement 16 weist sechs Außenlamellen auf. Das erste Kopplungselement 16 bildet den Außenlamellenträger 66 und die Mehrzahl an Außenlamellen aus.

Die Schalteinheit 14 weist ein zweites Kopplungselement 18 auf. Das zweite Kopplungselement 18 weist einen Innenlamellenträger 78 auf. Das zweite Kopplungselement 18 weist eine Mehrzahl an Innenlamellen auf, wovon beispielhaft eine Innenlamelle 80 mit einem Bezugszeichen versehen ist. Das zweite Kopplungselement 18 weist sechs Innenlamellen auf. Die Innenlamellen und die Außenlamellen greifen alternierend ineinander. Eine jede der Innenlamellen weist beidseitig Reibbeläge auf. Das zweite Kopplungselement 18 bildet den Innenlamellenträger 78 und die Mehrzahl an Innenlamellen aus.

Das erste Kopplungselement 16 und das zweite Kopplungselement 18 sind drehfest miteinander verbindbar. Die Schalteinheit 14 ist zu einer drehfesten Verbindung des ersten Kopplungselements 16 und des zweiten Kopplungselements 18 vorgesehen.

Das Kraftfahrzeuggetriebe 10 weist einen Betätigungsaktuator 70 auf. Der Betätigungsaktuator 70 ist zu einer Betätigung der Schalteinheit 14 vorgesehen. Der Betätigungsaktuator 70 ist zu einem Aneinanderpressen der Innenlamellen und der Außenlamellen vorgesehen. Der Betätigungsaktuator 70 ist als ein Spreizaktuator ausgebildet. Der Betätigungsaktuator 70 ist als ein Winkelaktuator ausgebildet. Der Betätigungsaktuator 70 ist selbsthemmend ausgebildet. Der Betätigungsaktuator 70 ist als ein elektromechanischer Aktuator ausgebildet. Der Betätigungsaktuator 70 ist als ein integrierter Aktuator ausgebildet.

Das Kraftfahrzeuggetriebe 10 weist eine Spreizeinheit 60 auf. Der Betätigungsaktuator 70 weist die Spreizeinheit 60 auf.

Die Spreizeinheit 60 ist im Wesentlichen axial benachbart zu der ersten Tellereinheit 48 angeordnet.

Die Spreizeinheit 60 ist vorteilhaft radial außerhalb einer Getriebeeinheit 34 angeordnet.

Die Spreizeinheit 60 umfasst ein erstes Spreizelement 62. Das erste Spreizelement 62 weist eine erste Lauffläche 86 auf. Die Spreizeinheit 60 umfasst ein zweites Spreizelement 82. Das zweite Spreizelement 82 weist eine zweite Lauffläche 88 auf. Das zweite Spreizelement 82 ist axial im Bereich des ersten Spreizelements 62 angeordnet. Ein Teil des ersten Spreizelements 62 ist radial innerhalb des zweiten Spreizelements 82 angeordnet. Ferner ist ein Teil des zweiten Spreizelements 82 radial außerhalb des ersten Spreizelements 62 angeordnet.

Die Spreizeinheit 60 umfasst zumindest einen Wälzkörper 84. Der zumindest eine Wälzkörper 84 ist als Spreizkugel ausgebildet. Der zumindest eine Wälzkörper 84 ist zwischen dem ersten Spreizelement 62 und dem zweiten Spreizelement 82 angeordnet. Der zumindest eine Wälzkörper 84 kontaktiert das erste Spreizelement 62 an der ersten Lauffläche 86. Ferner kontaktiert der zumindest eine Wälzkörper 84 das zweite Spreizelement 82 an der zweiten Lauffläche 88. Die erste Lauffläche 86 und die zweite Lauffläche 88 sind in einem spitzen Winkel zueinander angeordnet. Bei einer Relativbewegung des ersten Spreizelements 62 relativ zu dem zweiten Spreizelement 82 drückt der zumindest eine Wälzkörper 84 das erste Spreizelement 62 und das zweite Spreizelement 82 auseinander.

Das Kraftfahrzeuggetriebe 10 umfasst ein Schrägkugellager 64. Das Schrägkugellager 64 ist axial zwischen der ersten Tellereinheit 48 und der Schalteinheit 14 angeordnet. Das Schrägkugellager 64 ist in einer rillenförmigen Vertiefung der ersten Tellereinheit 48 angeordnet. Das Schrägkugellager 64 ist zu einer Abstützung der Spreizeinheit 60 gegen die erste Tellereinheit 48 vorgesehen. Das Schrägkugellager 64 ist zu einer Abstützung des ersten Spreizelements 62 gegen die erste Tellereinheit 48 vorgesehen.

Das Kraftfahrzeuggetriebe 10 umfasst einen Betätigungsmotor 20. Der Betätigungsaktuator 70 weist den Betätigungsmotor 20 auf. Der Betätigungsmotor 20 ist als ein Außenläufermotor ausgebildet. Der Betätigungsmotor 20 ist zu einer Betätigung der Schalteinheit 14 vorgesehen. Der Betätigungsmotor 20 ist zu einer Betätigung der Schalteinheit 14 mittels der Spreizeinheit 60 vorgesehen. Der Betätigungsmotor 20 ist als ein Schrittmotor ausgebildet. Der Betätigungsmotor 20 weist eine Mehrzahl an Winkelschrittstellungen auf. Der Betätigungsmotor 20 weist in einer jeden der Winkelschrittstellungen ein Rastmoment auf. Dadurch kann insbesondere bei mechanischen Einflüssen, beispielsweise Vibrationen, Schlägen, Fahrbahneinflüssen und/oder Fahrdynamikeinflüssen, ein Halten in einer gegebenen Position sichergestellt werden. Ferner kann eine hohe Präzision eines von einer betätigten Schalteinheit übertragenen Drehmoments erreicht werden, insbesondere durch Unterteilung von Winkelschrittstellungen in einem Micro-Stepping-Betrieb. Alternativ oder zusätzlich könnte ein Betätigungsmotor als ein Drehstrommotor ausgebildet sein und/oder weitere elektromotorische Prinzipien aufweisen.

Der Betätigungsmotor 20 weist einen Stator 24 auf. Der Stator 24 und das erste Kopplungselement 16 sind permanent drehfest verbunden. Der Stator 24 und das erste Kopplungselement 16 sind mittels der ersten Tellereinheit 48 permanent drehfest verbunden. Der Stator 24 und die erste Tellereinheit 48 sind permanent drehfest verbunden. Der Stator 24 und die erste Tellereinheit 48 sind unmittelbar permanent drehfest verbunden. Der Stator 24 und die zweite Tellereinheit 50 sind permanent drehfest verbunden. Der Stator 24 und die zweite Tellereinheit 50 sind vorteilhaft unmittelbar permanent drehfest verbunden.

Der Stator 24 ist ringförmig ausgebildet. Dadurch kann ein unwuchtfreier Lauf ermöglicht werden. Der Stator 24, die erste Tellereinheit 48, die zweite Tellereinheit 50 und das erste Kopplungselement 16, die allesamt permanent drehfest miteinander verbunden sind, drehen sich in einem Betrieb des Kraftfahrzeuggetriebes in vielen Betriebszuständen gemeinsam.

Vorteilhaft weisen die erste Tellereinheit 48, der Stator 24 und die zweite Tellereinheit 50 in zumindest einer Schnittebene, insbesondere parallel zu der Hauptrotationsachse 90, zusammen eine zumindest im Wesentlichen U-förmige Schnittfläche auf. Der Stator 24 weist eine Mehrzahl an nicht näher bezeichneten Statorspulen auf. Die Statorspulen sind über einen Statorumfang hintereinander aufgereiht. Die Statorspulen sind dazu vorgesehen, ein magnetisches Schrittfeld zu generieren. Alternativ könnten Spulen zu einer Generierung eines magnetischen Drehfelds vorgesehen sein.

Der Betätigungsmotor 20 weist einen Rotor 22 auf. Der Rotor 22 ist radial außerhalb des Stators 24 angeordnet. Der Rotor 22 ist ringförmig ausgebildet. Dadurch kann ein unwuchtfreier Lauf ermöglicht werden. Ein Luftspalt zwischen dem Rotor 22 und dem Stator 24 ist über einen gesamten Umfang konstant. Der Rotor 22 weist eine Mehrzahl an nicht näher bezeichneten Dauermagneten auf. Die Nord- und Südpole der Dauermagneten sind alternierend entgegengesetzt ausgerichtet. Eine Anzahl und Teilung der Dauermagneten ist auf die Statorspulen abgestimmt.

Das Kraftfahrzeuggetriebe 10 umfasst ein erstes Radiallager 54. Das erste Radiallager 54 ist axial zwischen der ersten Tellereinheit 48 und dem Stator 24 angeordnet. Das erste Radiallager 54 ist senkrecht zu der Hauptrotationsachse 90 betrachtet zwischen der ersten Tellereinheit 48 und dem Stator 24 angeordnet. Ein äußerer Teil des ersten Radiallagers 54 ist unmittelbar mit dem Rotor 22 gekoppelt. Ferner ist ein innerer Teil des ersten Radiallagers 54 unmittelbar mit dem Stator 24 gekoppelt. Das erste Radiallager 54 ist zu einer Lagerung des Rotors 22 gegenüber dem Stator 24 vorgesehen. Das erste Radiallager 54 ist als ein Wälzlager, insbesondere als ein Kugellager und vorzugsweise als ein Rillenkugellager, ausgebildet.

Das Kraftfahrzeuggetriebe 10 umfasst ein zweites Radiallager 56. Das zweite Radiallager 56 ist axial zwischen der zweiten Tellereinheit 50 und dem Stator 24 angeordnet. Das erste Radiallager 54 ist senkrecht zu der Hauptrotationsachse 90 betrachtet zwischen der ersten Tellereinheit 48 und dem Stator 24 angeordnet. Ein äußerer Teil des zweiten Radiallagers 56 ist unmittelbar mit der zweiten Tellereinheit 50 gekoppelt. Ferner ist ein innerer Teil des zweiten Radiallagers 56 unmittelbar mit dem Rotor 22 gekoppelt. Das zweite Radiallager 56 ist zu einer Lagerung des Rotors 22 gegenüber dem Stator 24 vorgesehen. Das zweite Radiallager 56 ist als ein Wälzlager, insbesondere als ein Kugellager und vorzugsweise als ein Rillenkugellager, ausgebildet.

Das erste Radiallager 54 ist radial innerhalb des zweiten Radiallagers 56 angeordnet. Das erste Radiallager 54 weist in der Hauptrotationsachse 90 betrachtet einen geringeren Radius auf als das zweite Radiallager 56. Das erste Radiallager 54, das zweite Radiallager 56 und der Rotor 22 weisen gemeinsam eine S-förmige Schnittfläche auf. Der Rotor 22 ist lediglich durch das erste Radiallager 54 und das zweite Radiallager 56 gelagert. Der Rotor 22 ist durch das erste Radiallager 54 und das zweite Radiallager 56 auf dem Stator 24 gelagert.

Das Kraftfahrzeuggetriebe 10 umfasst eine Getriebevorrichtung 32. Die Getriebevorrichtung 32 ist zu einer Umwandlung eines Drehmoments des Betätigungsmotors 20 in eine Betätigungskraft vorgesehen. Das Drehmoment ist als ein in einer Umfangsrichtung wirkendes Drehmoment ausgebildet. Die Betätigungskraft ist als eine axial wirkende Betätigungskraft ausgebildet. Ein Teil der Getriebevorrichtung 32 ist axial zwischen der ersten Tellereinheit 48 und der zweiten Tellereinheit 50 angeordnet. Ein Teil der Getriebevorrichtung 32 ist senkrecht zu der Hauptrotationsachse 90 betrachtet axial zwischen der ersten Tellereinheit 48 und der zweiten Tellereinheit 50 angeordnet. Ein Teil der Getriebevorrichtung 32 ist axial im Bereich der Schalteinheit 14 angeordnet. Ein Teil der Getriebevorrichtung 32 ist axial im Bereich des Betätigungsmotors 20 angeordnet. Ein Teil der Getriebevorrichtung 32 ist radial zwischen dem Rotor 22 und der Schalteinheit 14 angeordnet. Ein Teil der Getriebevorrichtung 32 ist in der Hauptrotationsachse 90 betrachtet radial zwischen dem Rotor 22 und der Schalteinheit 14 angeordnet. Die Getriebevorrichtung 32 umfasst die Spreizeinheit 60.

Die Getriebevorrichtung 32 weist eine Getriebeeinheit 34 auf. Die Getriebeeinheit 34 ist axial zwischen der ersten Tellereinheit 48 und der zweiten Tellereinheit 50 angeordnet. Die Getriebeeinheit 34 ist senkrecht zu der Hauptrotationsachse 90 betrachtet axial zwischen der ersten Tellereinheit 48 und der zweiten Tellereinheit 50 angeordnet. Die Getriebeeinheit 34 ist axial im Bereich der Schalteinheit 14 angeordnet. Die Getriebeeinheit 34 ist axial im Bereich des Betätigungsmotors 20 angeordnet. Die Getriebeeinheit 34 ist radial zwischen dem Rotor 22 und der Schalteinheit 14 angeordnet. Die Getriebeeinheit 34 ist in der Hauptrotationsachse 90 betrachtet radial zwischen dem Rotor 22 und der Schalteinheit 14 angeordnet.

Die Getriebeeinheit 34 und der Betätigungsmotor 20 sind integriert, insbesondere hoch- und/oder vollintegriert, ausgebildet. Die Getriebevorrichtung 32 ist integriert, insbesondere hoch- und/oder vollintegriert, ausgebildet. Die Getriebeeinheit 34 und die Spreizeinheit 60 sind integriert, insbesondere hoch- und/oder vollintegriert, ausgebildet. Der Betätigungsaktuator 70 ist integriert, insbesondere hoch- und/oder vollintegriert, ausgebildet. Die Getriebeeinheit 34, der Betätigungsmotor 20 und die Spreizeinheit 60 sind integriert, insbesondere hoch- und/oder vollintegriert, ausgebildet. Dadurch kann insbesondere ein bauteileeffizientes, bauraumeffizientes und unwuchtfreies System, vorzugsweise für eine hochdynamisch bewegte Anwendung, bereitgestellt werden. Vorteilhaft kann auf eine Bauteileverdopplung zur Aufhebung einer Unwucht verzichtet werden.

Die Getriebeeinheit 34 weist ein Planetengetriebe 58 auf. Das Planetengetriebe 58 ist als ein Doppelplanetengetriebe ausgebildet. Das Planetengetriebe 58 ist als ein Wolfromgetriebe ausgebildet. Dadurch kann ein vorteilhaft hohes Übersetzungsverhältnis und/oder eine kompakte Bauweise eines Betätigungsmotors und/oder einer Spreizeinheit erreicht werden. Das Planetengetriebe 58 übersetzt ins Langsame. Das Planetengetriebe 58 weist ein Übersetzungsverhältnis von mehr als 50, insbesondere von mehr als 100 und vorzugsweise von mehr als 200, auf. Alternativ oder zusätzlich könnte eine Getriebeeinheit zumindest ein Exzentergetriebe, zumindest ein Harmonic-Drive-Getriebe und/oder zumindest ein Acbar-Getriebe aufweisen. Ferner könnte eine Getriebeeinheit mehrere Planetengetriebe aufweisen.

Das Planetengetriebe 58 weist eine erste Zahnradebene 92 auf. Ferner weist das Planetengetriebe 58 eine zweite Zahnradebene 94 auf. Die zweite Zahnradebene 94 ist der ersten Zahnradebene 92 in Momentenstromrichtung nachgeschaltet. Das Planetengetriebe 58 weist vier Getriebeelemente 36, 38, 40, 42 auf.

Das Planetengetriebe 58 weist ein erstes Getriebeelement 36 auf. Das erste Getriebeelement 36 ist in der ersten Zahnradebene 92 angeordnet. Das erste Getriebeelement 36 ist als ein Sonnenrad ausgebildet. Das erste Getriebeelement 36 ist als ein Teil des Rotors 22 ausgebildet. Das erste Getriebeelement 36 und der Rotor 22 sind integriert ausgebildet. Das Sonnenrad ist durch den Betätigungsmotor 20, insbesondere den Rotor 22, antreibbar.

Das Planetengetriebe 58 weist ein zweites Getriebeelement 38 auf. Das zweite Getriebeelement 38 erstreckt sich über die erste Zahnradebene 92 und über die zweite Zahnradebene 94. Das zweite Getriebeelement 38 ist als ein Planetenradträger ausgebildet.

Das Planetengetriebe 58 weist ein drittes Getriebeelement 40 auf. Das dritte Getriebeelement 40 ist in der ersten Zahnradebene 92 angeordnet. Das dritte Getriebeelement 40 ist als ein erstes Hohlrad ausgebildet. Die Getriebeeinheit 34 umfasst das erste Hohlrad. Der Stator 24 ist axial zwischen der ersten Tellereinheit 48 und der zweiten Tellereinheit 50 angeordnet. Der Stator 24 ist mit dem dritten Getriebeelement 40 der Getriebeeinheit 34 permanent drehfest verbunden. Der Stator 24 ist mittels der zweiten Tellereinheit 50 mit dem dritten Getriebeelement 40 der Getriebeeinheit 34 permanent drehfest verbunden. Das dritte Getriebeelement 40 ist permanent drehfest mit der zweiten Tellereinheit 50 gekoppelt. Das dritte Getriebeelement 40 ist mit dem ersten Kopplungselement 16 permanent drehfest verbunden.

Das Planetengetriebe 58 weist ein viertes Getriebeelement 42 auf. Das vierte Getriebeelement 42 ist als ein zweites Hohlrad ausgebildet. Die Getriebeeinheit 34 weist das zweite Hohlrad auf. Das zweite Hohlrad ist permanent drehfest mit dem ersten Spreizelement 62 verbunden. Das zweite Hohlrad ist unmittelbar permanent drehfest mit dem ersten Spreizelement 62 verbunden. Das vierte Getriebeelement 42 bildet einen Abtrieb der Getriebeeinheit 34 aus.

Das dritte Getriebeelement 40 und das vierte Getriebeelement 42 weisen verschiedene Zähnezahlen auf. Das vierte Getriebeelement 42 weist eine höhere Zähnezahl auf als das dritte Getriebeelement 40. Eine Zähnezahldifferenz zwischen dem dritten Getriebeelement 40 und dem vierten Getriebeelement 42 beträgt eins. Dadurch kann eine vorteilhaft hohe Übersetzung eines als Wolfromgetriebe ausgebildeten Planetengetriebes ermöglicht werden. Alternativ könnte eine Zähnezahldifferenz zwischen einem dritten und einem vierten Getriebeelement größer als eins sein. Dabei nimmt ein Übersetzungsverhältnis eines als Wolfromgetriebe ausgebildeten Planetengetriebes, insbesondere bei ansonsten gleichbleibenden Parametern, mit einer zunehmenden Zähnezahldifferenz zwischen dem, insbesondere als ein erstes Hohlrad ausgebildeten, dritten Getriebeelement und dem, insbesondere als ein zweites Hohlrad ausgebildeten, vierten Getriebeelement ab.

Das Planetengetriebe 58 weist weitere Getriebeelemente 44, 46 auf. Die weiteren Getriebeelemente 44, 46 sind als Planetenräder ausgebildet. Die weiteren Getriebeelemente 44, 46 sind auf dem zweiten Getriebeelement 38, insbesondere frei drehbar, gelagert.

Erste weitere Getriebeelemente 44 der weiteren Getriebeelemente 44, 46 sind in der ersten Zahnradebene 92 angeordnet. Die ersten weiteren Getriebeelemente 44 kämmen mit dem ersten Getriebeelement 36. Die ersten weiteren Getriebeelemente 44 umlaufen das erste Getriebeelement 36. Die ersten weiteren Getriebeelemente 44 kämmen das dritte Getriebeelement 40. Die ersten weiteren Getriebeelemente 44 sind auf dem zweiten Getriebeelement 38, insbesondere frei drehbar, gelagert.

Ferner sind zweite weitere Getriebeelemente 46 der weiteren Getriebeelemente 44, 46 in der zweiten Zahnradebene 94 angeordnet. Die zweiten weiteren Getriebeelemente 46 kämmen das vierte Getriebeelement 42. Die zweiten weiteren Getriebeelemente 46 sind auf dem zweiten Getriebeelement 38, insbesondere frei drehbar, gelagert.

Eine Anzahl der ersten weiteren Getriebeelemente 44 entspricht einer Anzahl der zweiten weiteren Getriebeelemente 46. Je eines der ersten weiteren Getriebeelemente 44 bildet mit je einem der zweiten weiteren Getriebeelemente 46 ein Doppelplanetenrad aus. Je eines der ersten weiteren Getriebeelemente 44 ist mit je einem der zweiten weiteren Getriebeelemente 46 permanent drehfest gekoppelt. Die ersten weiteren Getriebeelemente 44 und die zweiten weiteren Getriebeelemente 46 weisen eine selbe Zähnezahl auf. Die ersten weiteren Getriebeelemente 44 und die zweiten weiteren Getriebeelemente 46 weisen verschiedene Radien auf. Die zweiten weiteren Getriebeelemente 46 weisen einen höheren Radius auf als die ersten weiteren Getriebeelemente 44. Es kann auch durch eine Flankenkorrektur von, insbesondere evolventischen, Verzahnungen von weiteren Getriebeelementen mit einem dritten Getriebeelement und mit einem vierten Getriebeelement bei einer geringen Zähnezahldifferenz des dritten Getriebeelements und des vierten Getriebeelements ein gemeinsamer Achsabstand einer Verzahnung erster weiterer Getriebeelemente mit dem dritten Getriebeelement und einer Verzahnung zweiter weiterer Getriebeelemente mit dem vierten Getriebeelement erreicht werden. Somit können weitere Getriebeelemente als Doppel-Planetenräder ausgebildet werden und/oder auf einer selben Achse auf dem zweiten Getriebeelement gelagert werden. Dadurch kann insbesondere eine hohe Bauraumeffizienz und/oder eine leichte Bauweise erreicht werden. Vorzugsweise kann eine geringe Zahnradbreite und eine vielfache Kraftübertragung erreicht werden.

Bei einer günstig gewählten Kombination von Zähnezahlen und/oder einer Zähnezahldifferenz eines dritten Getriebeelements und eines vierten Getriebeelements kann insbesondere, vorzugsweise durch Überlagerung von über Wälz- und/oder Kupplungsleistung übertragenen Leistungsanteilen, in einer Antriebsrichtung ein guter Wirkungsgrad erreicht werden bei einer gleichzeitigen Selbsthemmung einer Getriebeeinheit in einer umgekehrten Richtung. Dadurch kann insbesondere eine ausschließliche Energieaufnahme während einer Betätigung einer Schalteinheit gewährleistet werden. Zum Halten einer beliebigen Position der Schalteinheit, selbst unter beliebigen Betriebskräften entlang deren möglichen Bewegungsrichtung, ist insbesondere kein zusätzlicher Energieaufwand nötig. Im Rahmen einer Getriebefestigkeit ist somit durch eine Selbsthemmung insbesondere eine energieaufnahmefreie und/oder sichere Positionierung eines Betätigungsaktuators möglich. Eine derartige Auslegung ist insbesondere sinnvoll, wenn ein Zeitanteil einer Aktuierung einen Zeitanteil eines Haltens einer angefahrenen Position deutlich unterschreitet.

Das Kraftfahrzeuggetriebe 10 umfasst eine Elektronikeinheit 52. Die Elektronikeinheit 52 ist an der zweiten Tellereinheit 50 angeordnet. Die Elektronikeinheit 52 ist mit der zweiten Tellereinheit 50 permanent drehfest gekoppelt. Die Elektronikeinheit 52 ist mit der zweiten Tellereinheit 50 unmittelbar permanent drehfest gekoppelt. Die Elektronikeinheit 52 ist vorteilhaft ringförmig ausgebildet. Dabei sind Einzelteile der Elektronikeinheit 52 innerhalb eines Ringes über den Umfang des Ringes gleichmäßig verteilt. Die Elektronikeinheit 52 dreht sich in einem Betrieb des Kraftfahrzeuggetriebes 10 gemeinsam mit dem Stator 24, der erste Tellereinheit 48, der zweite Tellereinheit 50 und dem ersten Kopplungselement 16.

Die Einzelteile der Elektronikeinheit 52 sind eingegossen, insbesondere in Kunststoff. Durch eine Materialabnahme kann somit eine sehr geringe Unwucht erreicht werden. Die Sekundärspule 30 ist mit der Elektronikeinheit 52 verkabelt. Ferner ist die Elektronikeinheit 52 mit dem Stator 24 verkabelt. Daher sind die Sekundärspule 30, das die Sekundärspule 30 tragende erste Kopplungselement 16, die erste Tellereinheit 48, die zweite Tellereinheit 50, die an der zweiten Tellereinheit 50 angeordnete Elektronikeinheit 52, das erste dritte Getriebeelement 40 und der Stator 24 permanent drehfest miteinander gekoppelt. Grundsätzlich könnte auch ein zweites Kopplungselement mit einer Sekundärspule und somit mit einer Elektronikeinheit, einem Stator und einem dritten Getriebeelement permanent drehfest verbunden sein.

Das Kraftfahrzeuggetriebe 10 umfasst eine Induktionseinheit 26. Die Induktionseinheit 26 ist zu einer Energieversorgung des Betätigungsmotors 20 vorgesehen. Die Induktionseinheit 26 ist dazu vorgesehen, die Spulen des Stators 24 mit Strom zu versorgen. Die Induktionseinheit 26 ist dazu vorgesehen, die Elektronikeinheit 52 mit Strom zu versorgen.

Die Induktionseinheit 26 weist eine Primärspule 28 auf. Die Primärspule 28 ist mit dem Gehäuse 12 permanent drehfest verbunden. Die Primärspule 28 ist mit dem Gehäuse 12 unmittelbar permanent drehfest verbunden. Die Induktionseinheit 26 weist eine Sekundärspule 30 auf. Die Sekundärspule 30 ist permanent drehfest mit dem ersten Kopplungselement 16 verbunden. Die Sekundärspule 30 ist unmittelbar permanent drehfest mit dem ersten Kopplungselement 16 gekoppelt. Die Sekundärspule 30 ist permanent drehfest mit dem Außenlamellenträger 66 gekoppelt. Die Sekundärspule 30 ist unmittelbar permanent drehfest mit dem Außenlamellenträger 66 gekoppelt. Die Primärspule 28 und die Sekundärspule 30 sind durch eine Getriebewelle 96 räumlich voneinander getrennt.

Die Getriebewelle 96 dreht sich in vielen Betriebszuständen des Kraftfahrzeuggetriebes 10. Die Getriebewelle 96 ist vorteilhaft zumindest abschnittsweise in dem Bereich der Induktionseinheit 26 aus einem elektrisch nicht leitenden Material gefertigt. Besonders vorteilhaft ist die Getriebewelle 96 zumindest abschnittsweise aus einem Faser-Verbundwerkstoff hergestellt. Besonders vorteilhaft ist die Getriebewelle 96 aus einem Glasfaserverbundwerkstoff hergestellt.

Die Sekundärspule 30 ist permanent drehfest mit dem Stator 24 verbunden. Die Sekundärspule 30 ist mittels einer nicht dargestellten Stromversorgungsleitung mit dem Stator 24 verbunden, so dass durch die Sekundärspule 30 eine Stromversorgung für den Stator 24 erfolgt.

Die Stromversorgung für den Stator 24 erfolgt insgesamt ausgehend von der Primärspule 28 zunächst induktiv auf die Sekundärspule 30 und von dort weiter über die Stromversorgungsleitung zu dem Stator 24.

Die Elektronikeinheit 52 ist zum einen zu ihrer eigenen Stromversorgung an die Stromversorgungsleitung bzw. an die Sekundärspule 30 angeschlossen, zum anderen ist die Elektronikeinheit 52 zur Steuerung und Regelung mittels einer Verkabelung an den Stator 24 angeschlossen. Die Stromversorgungsleitung für den Stator kann dabei ausgehend von der Sekundärspule 30 zunächst über die Elektronikeinheit 52 und von dort zu dem Stator 24 verlaufen.

Das Kraftfahrzeuggetriebe 10 weist eine Steuer- und Regeleinheit 72 auf. Die Steuer- und Regeleinheit 72 ist zu einer Ansteuerung des Betätigungsaktuators 70 vorgesehen. Die Steuer- und Regeleinheit 72 ist mittels der Induktionseinheit 26 mit der Elektronikeinheit 52 verbunden.

### Bezugszeichenliste

- 10: Kraftfahrzeuggetriebe
- 12: Gehäuse
- 14: Schalteinheit
- 16: Kopplungselement
- 18: Kopplungselement
- 20: Betätigungsmotor
- 22: Rotor
- 24: Stator
- 26: Induktionseinheit
- 28: Primärspule
- 30: Sekundärspule
- 32: Getriebevorrichtung
- 34: Getriebeeinheit
- 36: Getriebeelement
- 38: Getriebeelement
- 40: Getriebeelement
- 42: Getriebeelement
- 44: Getriebeelemente
- 46: Getriebeelemente
- 48: Tellereinheit
- 50: Tellereinheit
- 52: Elektronikeinheit
- 54: Radiallager
- 56: Radiallager
- 58: Planetengetriebe
- 60: Spreizeinheit
- 62: Spreizelement
- 64: Schrägkugellager
- 66: Außenlamellenträger
- 68: Außenlamelle
- 70: Betätigungsaktuator
- 72: Steuer- und Regeleinheit
- 74: Planetenradstufe
- 76: Planetenradstufe
- 78: Innenlamellenträger
- 80: Innenlamelle
- 82: Spreizelement
- 84: Wälzkörper
- 86: Lauffläche
- 88: Lauffläche
- 90: Hauptrotationsachse
- 92: Zahnradebene
- 94: Zahnradebene
- 96: Getriebewelle

## Patentansprüche

1. Kraftfahrzeuggetriebe (10) mit einem Gehäuse (12), mit einer Schalteinheit (14), welche ein erstes Kopplungselement (16) und ein mit dem ersten Kopplungselement (16) drehfest verbindbares zweites Kopplungselement (18) aufweist, mit zumindest einem als ein Außenläufermotor ausgebildeten Betätigungsmotor (20), welcher zu einer Betätigung der Schalteinheit (14) vorgesehen ist und welcher einen Rotor (22) und einen Stator (24) aufweist, mit zumindest einer Induktionseinheit (26), welche zu einer Energieversorgung des Betätigungsmotors (20) vorgesehen ist und welche zumindest eine Primärspule (28) und zumindest eine Sekundärspule (30) aufweist, mit zumindest einer Getriebevorrichtung (32), welche zu einer Umwandlung eines in einer Umfangsrichtung wirkenden Drehmoments des Betätigungsmotors (20) in eine axial wirkende Betätigungskraft vorgesehen ist und welche eine Getriebeeinheit (34) mit einem ersten Hohlrad (40) aufweist, wobei das erste Kopplungselement (16) und der Stator (24) mittels einer ersten Tellereinheit (48) permanent drehfest verbunden sind,
**dadurch gekennzeichnet dass**
der Stator (24) mittels einer zweiten Tellereinheit (50) permanent drehfest mit zumindest einem Getriebeelement der Getriebeeinheit (34) verbunden ist und der Stator (24) axial zwischen der ersten Tellereinheit (48) und der zweiten Tellereinheit (50) angeordnet ist.

2. Kraftfahrzeuggetriebe (10) nach Anspruch 1,
**gekennzeichnet durch**
zumindest eine ringförmig ausgebildete Elektronikeinheit (52), die an der zweiten Tellereinheit (50) angeordnet ist und die mit der zweiten Tellereinheit (50) permanent drehfest gekoppelt ist.

3. Kraftfahrzeuggetriebe (10) nach Anspruch 1 oder 2,
**gekennzeichnet durch**
eine Getriebewelle (96), welche radial zwischen der Primärspule (28) und der Sekundärspule (30) angeordnet ist und welche zumindest abschnittsweise aus einem elektrisch nicht leitenden Material gefertigt ist.

4. Kraftfahrzeuggetriebe (10) nach einem der vorhergehenden Ansprüche, **gekennzeichnet durch**
zumindest ein erstes Radiallager (54), welches axial zwischen der ersten Tellereinheit (48) und dem Stator (24) angeordnet ist und welches zu einer Lagerung des Rotors (22) gegenüber dem Stator (24) vorgesehen ist.

5. Kraftfahrzeuggetriebe (10) nach einem der vorhergehenden Ansprüche, **gekennzeichnet durch**
zumindest ein zweites Radiallager (56), welches axial zwischen der zweiten Tellereinheit (50) und dem Stator (24) angeordnet ist und welches zu einer Lagerung des Rotors (22) gegenüber dem Stator (24) vorgesehen ist.

6. Kraftfahrzeuggetriebe (10) nach Anspruch 4 und 5,
**dadurch gekennzeichnet, dass**
das erste Radiallager (54) radial innerhalb des zweiten Radiallagers (56) angeordnet ist.

7. Kraftfahrzeuggetriebe (10) nach einem der vorhergehenden Ansprüche,
**dadurch gekennzeichnet, dass**
die Getriebevorrichtung (32) axial zwischen der ersten Tellereinheit (48) und der zweiten Tellereinheit (50) angeordnet ist.

8. Kraftfahrzeuggetriebe (10) nach einem der vorhergehenden Ansprüche,
**dadurch gekennzeichnet, dass**
zumindest ein Teil der Getriebevorrichtung (32) radial zwischen dem Rotor (22) und der Schalteinheit (14) angeordnet ist.

9. Kraftfahrzeuggetriebe (10) nach einem der vorhergehenden Ansprüchen,
**dadurch gekennzeichnet, dass**
die Getriebeeinheit (34) zumindest ein Planetengetriebe (58) aufweist.

10. Kraftfahrzeuggetriebe (10) nach einem der vorhergehenden Ansprüchen,
**dadurch gekennzeichnet, dass**
die Getriebeeinheit (34) zumindest ein zweites Hohlrad (42) aufweist, welches permanent drehfest mit einem ersten Spreizelement (62) einer Spreizeinheit (60) verbunden ist.

11. Kraftfahrzeuggetriebe (10) nach Anspruch 10,
**dadurch gekennzeichnet, dass**
die Spreizeinheit (60) radial außerhalb der Getriebeeinheit (34) angeordnet ist.

12. Kraftfahrzeuggetriebe (10) nach einem der Ansprüche 10 und 11,
**gekennzeichnet durch**
zumindest ein Schrägkugellager (64), welches zu einer Abstützung der Spreizeinheit (60) gegen die erste Tellereinheit (48) vorgesehen ist.

13. Kraftfahrzeuggetriebe (10) nach einem der vorhergehenden Ansprüche,
**dadurch gekennzeichnet, dass**
der Stator (24) mittels der zweiten Tellereinheit (50) permanent drehfest mit dem ersten Hohlrad (40) der Getriebeeinheit (34) verbunden ist.

14. Kraftfahrzeuggetriebe (10) nach einem der vorhergehenden Ansprüche,
**dadurch gekennzeichnet, dass**
das erste Kopplungselement (16) einen Außenlamellenträger (66) und eine Mehrzahl an Außenlamellen ausbildet.

15. Kraftfahrzeuggetriebe (10) nach einem der vorhergehenden Ansprüche,
**dadurch gekennzeichnet, dass**
die Sekundärspule (30) permanent drehfest mit dem ersten Kopplungselement (16) gekoppelt ist.

## Claims

1. Motor vehicle gearbox (10) with a housing (12), with a shifting unit (14) having a first coupling element (16) and a second coupling element (18) non-rotatably connectable to the first coupling element (16), with at least one actuating motor (20), which is designed as an external rotor motor and provided for an actuation of the shifting unit (14) and which has a rotor (22) and a stator (24), with at least one induction unit (26), which is provided for an energy supply of the actuating motor (20) and which has at least one primary coil (28) and at least one secondary coil (30), with at least one gearbox device (32), which is provided for converting a torque of the actuating motor (20) acting in the circumferential direction into an axially acting actuating force and which has a gearbox unit (34) with a first ring gear (40), the first coupling element (16) and the stator (24) being permanently non-rotatably connected by means of a first plate unit (48),
**characterised in that**
the stator (24) is permanently non-rotatably connected to at least one gearbox element of the gearbox unit (34) by means of a second plate unit (50) and **in that** the stator (24) is axially located between the first plate unit (48) and the second plate unit (50).

2. Motor vehicle gearbox (10) according to claim 1,
**characterised by**
at least one electronic unit (52) of an annular design, which is located at the second plate unit (50) and is permanently non-rotatably coupled to the second plate unit (50).

3. Motor vehicle gearbox (10) according to claim 1 or 2,
**characterised by**
a gear shaft (96), which is located radially between the primary coil (28) and the secondary coil (30) and at least a section of which is made of an electrically nonconductive material.

4. Motor vehicle gearbox (10) according to any of the preceding claims,
**characterised by**
at least one first radial bearing (54), which is located axially between the first plate unit (48) and the stator (24) and which is provided for a bearing-mounting of the rotor (22) with respect to the stator (24).

5. Motor vehicle gearbox (10) according to any of the preceding claims,
**characterised by**
at least one second radial bearing (56), which is located axially between the second plate unit (50) and the stator (24) and which is provided for a bearing-mounting of the rotor (22) with respect to the stator (24).

6. Motor vehicle gearbox (10) according to claims 4 and 5,
**characterised in that**
the first radial bearing (54) is located radially within the second radial bearing (56).

7. Motor vehicle gearbox (10) according to any of the preceding claims,
**characterised in that**
the gearbox device (32) is located axially between the first plate unit (48) and the second plate unit (50).

8. Motor vehicle gearbox (10) according to any of the preceding claims,
**characterised in that**
at least a part of the gearbox device (32) is located radially between the rotor (22) and the shifting unit (14).

9. Motor vehicle gearbox (10) according to any of the preceding claims,
**characterised in that**
the gearbox unit (34) has at least one planetary gearing (58).

10. Motor vehicle gearbox (10) according to any of the preceding claims,
**characterised in that**
the gearbox unit (34) has at least one second ring gear (42), which is permanently non-rotatably connected to a first spreading element (62) of a spreading unit (60).

11. Motor vehicle gearbox (10) according to claim 10,
**characterised in that**
the spreading unit (60) is located radially outside the gearbox unit (34).

12. Motor vehicle gearbox (10) according to one of claims 10 and 11,
**characterised by**
at least one angular contact ball bearing (64) provided for supporting the spreading unit (60) against the first plate unit (48).

13. Motor vehicle gearbox (10) according to any of the preceding claims,
**characterised in that**
the stator (24) is permanently non-rotatably connected to the first ring gear (40) of the gearbox unit (34) by means of the second plate unit (50).

14. Motor vehicle gearbox (10) according to any of the preceding claims,
**characterised in that**
the first coupling element (16) forms an outer disc support (66) and a plurality of outer discs.

15. Motor vehicle gearbox (10) according to any of the preceding claims,
**characterised in that**
the secondary coil (30) is permanently non-rotatably coupled to the first coupling element (16).

## Revendications

1. Boîte de vitesses de véhicule à moteur (10) comprenant un boîtier (12), avec une unité de changement de vitesse (14) qui présente un premier élément d'embrayage (16) et un second élément d'embrayage (18) pouvant être relié solidaire en rotation au premier élément d'embrayage (16), avec au moins un moteur d'actionnement (20) conçu sous la forme d'un moteur à rotor externe, qui sert à actionner l'unité de changement de vitesse (14) et qui présente un rotor (22) et un stator (24), avec au moins une unité d'induction (26) qui sert à alimenter en énergie le moteur d'actionnement (20) et qui comprend au moins une bobine primaire (28) et au moins une bobine secondaire (30), avec au moins un dispositif d'entraînement (32) qui sert à transformer un couple de rotation agissant dans une direction périphérique du moteur d'actionnement (20) en un couple de rotation agissant axialement et qui présente une unité de transmission (34) avec une première couronne (40), le premier élément d'embrayage (16) et le stator (24) étant reliés solidaire en rotation en permanence au moyen d'une première unité de plateau (48),
**caractérisée en ce que**
le stator (24) est relié solidaire en rotation en permanence au moyen d'une seconde unité de plateau (50) à au moins un élément de transmission de l'unité de transmission (34) et le stator est disposé axialement entre la première unité de plateau (48) et la seconde unité de plateau (50).

2. Boîte de vitesses de véhicule à moteur (10) selon la revendication 1,
**caractérisée par**
au moins une unité électronique conçue sous forme annulaire (52) qui est disposée sur la seconde unité de plateau (50) et qui est couplée solidaire en rotation en permanence à la seconde unité de plateau (50).

3. Boîte de vitesses de véhicule à moteur (10) selon la revendication 1 ou la revendication 2,
**caractérisée par**
un arbre de transmission (96), qui est disposé radialement entre la bobine primaire (28) et la bobine secondaire (30) et qui est fabriqué au moins à certains endroits dans un matériau diélectrique.

4. Boîte de vitesses de véhicule à moteur (10) selon l'une quelconque des revendications précédentes,
**caractérisée par**
au moins un premier palier à charge radial (54) qui est disposé axialement entre la première unité de plateau (48) et le stator (24) et qui sert à supporter le rotor (22) par rapport au stator (24).

5. Boîte de vitesses de véhicule à moteur (10) selon l'une quelconque des revendications précédentes,
**caractérisée par**
au moins un second palier à charge radial (56) qui est disposé axialement entre la seconde unité de plateau (50) et le stator (24) et qui sert à supporter le rotor (22) par rapport au stator (24).

6. Boîte de vitesses de véhicule à moteur (10) selon la revendication 4 ou la revendication 5,
**caractérisée en ce que**
le premier palier à charge radiale (54) est disposé radialement à l'intérieur du second palier à charge radiale (56).

7. Boîte de vitesses de véhicule à moteur (10) selon l'une quelconque des revendications précédentes,
**caractérisée en ce que**
le dispositif de transmission (32) est disposé axialement entre la première unité de plateau (48) et la seconde unité de plateau (50).

8. Boîte de vitesses de véhicule à moteur (10) selon l'une quelconque des revendications précédentes,
**caractérisée en ce qu'**
au moins une partie du dispositif de transmission (32) est disposée radialement entre le rotor (22) et l'unité de changement de vitesse (14).

9. Boîte de vitesses de véhicule à moteur (10) selon l'une quelconque des revendications précédentes,
**caractérisée en ce que**
l'unité de transmission (34) présentant au moins une boîte de vitesses à trains épicycloïdaux.

10. Boîte de vitesses de véhicule à moteur (10) selon l'une quelconque des revendications précédentes,
**caractérisée en ce que**
l'unité de transmission (34) comportant au moins une seconde couronne (42) qui est reliée solidaire en rotation en permanence avec un premier élément d'écartement (62) d'une unité d'écartement (60).

11. Boîte de vitesses de véhicule à moteur (10) selon la revendication 10,
**caractérisée en ce que**
l'unité d'écartement (60) est disposée radialement à l'extérieur de l'unité de transmission (34).

12. Boîte de vitesses de véhicule à moteur (10) selon l'une des revendications 10 et 11, **caractérisée par** au moins un palier à contacts obliques (64) qui permet l'appui de l'unité d'écartement (60) contre la première unité de plateau (48).

13. Boîte de vitesses de véhicule à moteur (10) selon l'une quelconque des revendications précédentes,
**caractérisée en ce que**
le stator (24) est relié solidaire en rotation en permanence au moyen de la seconde unité de plateau (50) à la première couronne (40) de l'unité de transmission (34).

14. Boîte de vitesses de véhicule à moteur (10) selon l'une quelconque des revendications précédentes,
**caractérisée en ce que**
le premier élément d'embrayage (16) forme un support de disques extérieurs (66) et une pluralité de disques extérieurs.

15. Boîte de vitesses de véhicule à moteur (10) selon l'une quelconque des revendications précédentes,
**caractérisée en ce que**
la bobine secondaire (30) est couplée solidaire en rotation en permanence au premier élément d'embrayage (16).
